# EUROPEAN PATENT APPLICATION

(11) **EP 4 650 158 A1**
(43) Date of publication of application: **19.11.2025**
(21) Application number: 24305775.9
(22) Date of filing: 17.05.2024
(51) Int. Cl.: B29D 11/00

(54) **METHOD FOR MANUFACTURING A THERMOSET OPHTHALMIC LENS INCLUDING A WAFER**

(71) Applicant: Essilor International, 94220 Charenton-Le-Pont (FR)
(72) Inventor: CHIPPAUX, Laurent, Bangkok (TH); FROMENTIN, Pierre, Bangkok (TH)
(74) Representative: Plasseraud IP

(57) **Abstract**

A method for manufacturing a thermoset ophthalmic lens that includes a wafer (13) comprises forming a sub-assembly comprised of one mould part (101), the wafer and at least one glue portion (30). Each glue portion may connect a bulging area of the wafer to the mould part. The sub-assembly can then be used to form a complete lens mould (100). The invention method alleviates drawbacks of previous methods, in particular reducing waste of thermoset material.

## Description

The invention relates to a method for manufacturing a thermoset ophthalmic lens that includes a wafer. It also relates to a sub-assembly useful for manufacturing such ophthalmic lens.

### -- BACKGROUND OF THE INVENTION --

Manufacturing of thermoset ophthalmic lenses that include wafers is necessary for providing to the lenses additional functions which are produced by the wafers. For example, a wafer may be micro-structured, but it may have any function, design and constitution. In particular, microstructures comprised of microlenses located in a peripheral part of the ophthalmic lenses are known to be useful for controlling myopia progression for the wearers.

It has been contemplated providing such microstructures to ophthalmic lenses by direct micromachining of mould parts used for casting the ophthalmic lenses, or replicating a microstructure pattern on mould parts from a replication master. But such techniques appear to be either too expensive, or not technically feasible, or producing microstructures with insufficient precision. Therefore, it is an issue to be capable of providing microstructures to thermoset ophthalmic lenses without significantly increasing the unit cost price of the ophthalmic lenses and their unit production time.

In a current method for manufacturing a wafer-including thermoset ophthalmic lens, the wafer is fitted into a groove provided in a gasket which peripherally seals a lens mould. But insertion of the wafer into the groove is delicate operation, requiring radial expansion of the gasket, thereby causing uncontrolled stresses in the gasket. Other issues relate to production of gaskets that do not exhibit initial deformation at the groove, possible defects in the positioning of the wafer into the groove, using of a clip for pressing the mould parts against the gasket but also causing gasket deformation, and this method being not compatible with using an adhering tape for sealing the mould of the lens.

US 11,529,779 B2 discloses affixing the wafer to one of both mould parts that are used for casting the ophthalmic lens, while maintaining free space for connecting to each other casting sub-volumes that are located on respective sides of the wafer. The wafer is maintained using adhesive dots that fixedly secure the wafer to the mould surface of the mould part with a gap therebetween. When pouring a monomer-containing liquid into the completed lens mould formed by both mould parts and peripheral mould sealing means, the liquid fills the sub-volumes internal to the lens mould on both sides of the wafer, thereby resulting after curing into the ophthalmic lens with the wafer embedded between two thermoset lens portions.

But in US 11,529,779 B2, for each ophthalmic lens to be cast, the adhesive dots connect a planar peripheral facet of the wafer which surrounds a bulged center area of this wafer, to a planar peripheral facet of one of both mould parts which surrounds its mould surface. Such configuration has numerous drawbacks, in particular the preforming of the wafer for producing the planar peripheral facet around its bulged center area is difficult and generates important internal stresses. In addition, a significant amount of thermoset material is wasted in the end, corresponding to the mould cavity part that is located between the respective planar facets of the wafer and wafer-bearing mould part. Furthermore, a separating distance between the wafer and the wafer-bearing mould part is determined by a shoulder profile of a wafer support, which does not allow rapid adjustment of the separating distance.

Starting from this situation, one object of the present invention consists in providing a new manufacturing method that does not have the previous drawbacks.

Another object of the invention consists in manufacturing ophthalmic lenses with embedded wafers without significantly increasing the unit cost price and the overall unit production time.

Still another object of the invention is to provide such manufacturing method that does not generate much wasted thermoset material.

### -- SUMMARY OF THE INVENTION --

For meeting at least one of these objects or others, a first aspect of the present invention proposes a new method for manufacturing a thermoset ophthalmic lens that includes a wafer, this method comprising the following steps:
/1/ providing two mould parts, comprising a first mould part that has a concave mould surface suitable for defining a front surface of the lens and a second mould part that has a convex mould surface suitable for defining a rear surface of the lens;
/2/ gluing the wafer onto one of the concave and convex mould surfaces, the corresponding first or second mould part being referred to as wafer-bearing mould part, so as to set a separating distance between the wafer and the concave or convex mould surface of said wafer-bearing mould part, using at least one glue portion;
/3/ assembling the first and second mould parts together with means for peripherally sealing a lens mould that encloses a cavity between the first and second mould parts, the glued wafer being located inside the cavity;
/5/ filling the cavity with a first monomer-containing liquid;
/6/ thermally processing the filled lens mould so as to cure at least the first monomer-containing liquid; and
/7/ separating the first and second mould parts from each other and recovering the lens including the wafer embedded therein.

According to a first feature of the invention, step /2/ is performed so that free space remaining between the wafer and the wafer-bearing mould part is filled in step /5/ together with a remaining empty part of the cavity between the wafer and the mould part other than the wafer-bearing mould part, thus resulting into the wafer and each glue portion being embedded in the monomer-containing liquid.

According to a second feature of the invention, the at least one glue portion used in step /2/ has viscosity and adhesion suitable for the separating distance being maintained between the wafer and the wafer-bearing mould part at constant final value from step /2/ to step /6/. Thanks to such selection of viscosity and adhesion values for each glue portion, it is not necessary to cure this glue portion thermally of with UV-irradiation. The overall method is simplified, and the production time is reduced.

According to a third feature of the invention, the wafer has a bulged shape, and the at least one glue portion contacts the wafer in step /2/ within at least one bulging area of this wafer. Therefore, the is no need for the wafer to exhibit planar peripheral area, so that preforming of the wafer is easier, and waste of thermoset material is reduced in a great extent. Throughout the present description, bulged shape means that the wafer is curved with two non-zero curvature values along orthogonal directions. Generally for the invention, it is not necessary that the bulged shape of the wafer matches the concave or convex mould surface of the wafer-bearing mould part.

Steps /3/ to /7/ may be implemented without much adaptation compared to known thermosetting processes. Furthermore, glue dispensers are available that can participate in executing step /2/ in a rapid, very well controlled and unexpensive manner.

In first possible implementations of the invention method, the at least one glue portion contacts the wafer in step /2/ within a center area of this wafer. Then, the glue portion may be a single one for each ophthalmic lens to be manufactured, with a large contact area with both the wafer and the mould surface of the wafer-bearing mould part. Good holding of the wafer by the wafer-bearing mould part is thus obtained, resulting in precise positioning of the wafer within the final ophthalmic lens. Reliability of the manufacturing method is improved in this way.

In second possible implementations of the invention method, the wafer is bulged up to a peripheral edge thereof, and the at least one glue portion contacts the wafer in step /2/ close to its peripheral edge. In such second implementations of the invention, the at least one glue portion may comprise several glue portions that each contact the wafer in step /2/ close to the wafer peripheral edge, each glue portion being shaped as a dot or an arc-shaped segment.

Generally for the invention, the at least one glue portion may be first deposited on the concave or convex mould surface of the wafer-bearing mould part, and then contacted with the wafer as this latter and the wafer-bearing mould part are moved closer to each other. Alternatively, the at least one glue portion may be first deposited on the wafer and then contacted with the wafer-bearing mould part by moving again the wafer and wafer-bearing mould part closer.

Also generally for the invention, the final value of the separating distance between the wafer and the wafer-bearing mould part may be produced by moving the wafer fastened to a support closer to the wafer-bearing mould part. Advantageously, the support may be provided with a supporting surface that matches the bulged shape of the wafer, and the wafer is maintained against this supporting surface temporarily in step /2/ using suction between the supporting surface of the support and the wafer.

When a wafer support is used in step /2/, the wafer and the wafer-bearing mould part may be moved closer to each other using an electrically driven actuator system which is arranged for moving the support and/or the wafer-bearing mould part. Easy adjustment and variation of the separating distance between the wafer and the wafer-bearing mould part can be achieved in this way.

In preferred implementations of the invention method, each glue portion may be implemented in step /2/ so as to contact both the wafer and the wafer-bearing mould part at the end of this step /2/, each glue portion having a thickness selected for producing the final value of the separating distance from step /2/. Put another way, each glue portion directly acts as a spacer in the sub-assembly formed by the wafer glued to the wafer-bearing mould part. For such preferred implementations, glue viscosity may be in the range of between 200 cP and 3000 cP (cP for centipoise, 1 cP = 10⁻³ Pa·s, Pa·s for Pascal-second).

In alternative implementations of the invention method, the wafer may be glued to the wafer-bearing mould part in step /2/ using at least one spacer between this wafer and this wafer-bearing mould part, each spacer having a thickness selected for producing the final value of the separating distance from step /2/. For each spacer in such implementations, a first glue portion is used between the spacer and the wafer and a second glue portion is used between the spacer and the wafer-bearing mould part. For such alternative implementations, glue viscosity may be again in the range of between 200 cP and 3000 cP.

Generally for the invention, the final value of the separating distance between the wafer and the wafer-bearing mould part as maintained from step /2/ may be between 0.6 mm (millimeter) and 1.2 mm when measured perpendicular to the wafer.

Also generally for the invention, the wafer may be of any type and designed for providing any function to the ophthalmic lens. In particular, the wafer may be micro-structured with depressions and reliefs, in particular depressions and reliefs forming a set of microlenses, a Fresnel microstructure or a grating pattern, or the wafer may be light-polarizing, or may be designed as an active wafer suitable for producing a variable lens parameter, or the wafer may have a reinforcement function for the lens. Alternatively or in combination, the wafer may be adapted for producing at least one of the following functions: tinting function, mirror function and antireflecting function. Generally, the wafer may comprise at least one portion of a thermoplastic material, and/or the microstructure be provided using an embossing process.

Also generally for the invention, each glue portion may be obtained from a second monomer-containing liquid, this second monomer-containing liquid being UV- or thermally pre-processed before step /2/ so as to become an oligomer-containing glue, and this oligomer-containing glue is used in step /2/ for forming the at least one glue portion. Such UV- or thermal pre-processing allows producing the viscosity value that is desired for each glue portion. Preferably, the first and second monomer-containing liquids may be identical. Thus, each glue portion may be thermoset in step /6/ simultaneously with the first monomer-containing liquid in optimized conditions. Additionally, each glue portion and the thermoset part of the ophthalmic lens may have same refractive index value in this way, so that each glue portion is not visible in the final ophthalmic lens.

Also generally for the invention, the wafer-bearing mould part may preferably be the first mould part that has the concave mould surface. This is especially convenient when the ophthalmic lens is a semi-finished lens.

Also generally for the invention, the means for peripherally sealing the lens mould may comprise a gasket designed for accommodating respective peripheral edges of the first and second mould parts in recesses of this gasket. Alternatively and preferably, these means may comprise a tape suitable for adhering to the respective peripheral edges of the first and second mould parts. Thus, the invention method is compatible with existing lens mould designs. For both gasket-based and tape-based configurations of the means for peripherally sealing the lens mould, a size of the wafer is advantageously selected so that its peripheral edge is surrounded by the means for peripherally sealing the lens mould during steps /5/ and /6/ with a gap intermediate between the peripheral edge of the wafer and the means for peripherally sealing the lens mould all around the wafer. This ensures that the peripheral mould sealing means do not push onto the peripheral edge of the wafer, thereby avoiding stresses and shape alterations to occur during steps /5/ and /6/ for the wafer.

A second aspect of the invention proposes a sub-assembly that comprises:
- a mould part, having a concave or convex mould surface suitable for defining a front surface of an ophthalmic lens or a rear surface of the lens, respectively;
- a wafer, affixed to the concave or convex mould surface and facing this mould surface with a gap therebetween; and
- at least one glue portion located between the wafer and the mould part.

According to the invention, the wafer is affixed to the concave or convex mould surface through the at least one glue portion, this at least one glue portion having viscosity and adhesion suitable for maintaining constant over time a separating distance between the wafer and the concave or convex mould surface.

Additionally, the wafer has a bulged shape, and the at least one glue portion contacts it within at least one bulging area of this wafer.

Such sub-assembly may be used in a same way as the mould part devoid of wafer in a standard casting process. It is easy to handle. It may be used in a manufacturing method according to the first invention aspect. In such case, the sub-assembly results from steps /1/ and /2/ and is used for executing steps /3/ to /7/.

These and other features of the invention will be now described with reference to the appended figures, which relate to preferred but not-limiting embodiments of the invention.

### -- BRIEF DESCRIPTION OF THE DRAWINGS --

Figure 1 is a cross-sectional view of an ophthalmic lens manufactured using the invention method;
Figures 2a and 2b are respective cross-sectional views of moulds used for casting thermoset lenses;
Figures 3a to 3g illustrate successive steps of a first implementation of the invention method which does not use spacers;
Figures 4a to 4c are projection views of a mould surface that show several possible glue portion distributions; and
Figures 5a to 5c illustrate successive steps of a second implementation of the invention method which uses spacers.

For clarity sake, element sizes which appear in these figures do not correspond to actual dimensions or dimension ratios. Also, same reference numbers which are indicated in different ones of these figures denote identical elements of elements with identical function.

### -- DETAILED DESCRIPTION OF THE INVENTION --

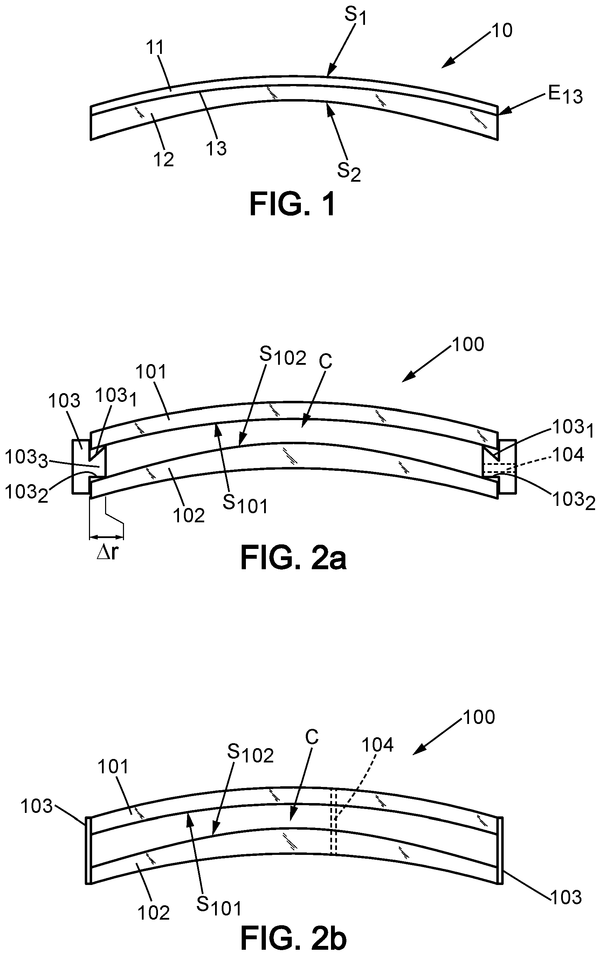

According to Figure 1, a wafer-embedding ophthalmic lens 10 to be manufactured includes a wafer 13 adhered to two lens portions located on either side of the wafer 13. Reference numbers 11 and 12 denote the lens portions. The lens 10 may be a so-called semi-finished lens where the final rear surface of the lens is to be machined in a later processing step. When resulting directly from the invention process, the front surface S₁ of the ophthalmic lens 10 is convex, and the rear surface S₂ of the ophthalmic lens 10 is concave. Diameter of the ophthalmic lens 10 may be of between 70 mm (millimeter) and 80 mm, for example.

The wafer 13 may be of any type, design and composition. At least part thereof may be comprised of a thermoplastic material. In general, the wafer has been preformed beforehand so that it exhibits a bulged shape. In the below description, it is assumed that the wafer 13 has non-zero curvature at any location therein, up to a peripheral edge E₁₃ of this wafer. In particular, the invention is especially convenient to embedding in a thermoset semi-finished ophthalmic lens 10 a wafer 13 that is provided with at least one microstructure comprised of relief areas and depression areas. Such microstructure may have been created by wafer injection, thermal embossing, surface moulding or other known microstructure-generating processes. For example, the wafer 13 may be 0.6 mm in thickness.

According to Figure 2a, a mould assembly 100 for thermoset ophthalmic lenses is comprised of a first mould part 101, a second mould part 102 and means for peripherally sealing the mould assembly 100, also called peripheral mould sealing means 103. First mould part 101 is provided with a first mould surface S₁₀₁ that is intended to define the front lens surface S₁ during the thermosetting process, and second mould part 102 is provided with a second mould surface S₁₀₂ that is intended to define the rear lens surface S₂. The peripheral mould sealing means 103 have three functions: firstly setting the separating distance between first and second mould surfaces S₁₀₁ and S₁₀₂ according to a target value for the lens thickness, secondly peripherally sealing a cavity C between first and second mould surfaces S₁₀₁ and S₁₀₂ so that a monomer-containing liquid can be introduced into this cavity C, and thirdly providing a filling aperture suitable for the liquid introduction.

First known embodiment of the peripheral mould sealing means 103 is shown in Figure 2a. The mould sealing means 103 are comprised of an annular gasket which is provided with re-entrant circular edge profiles 103₁ and 103₂ suitable for accommodating respective peripheral edges of the first and second mould parts 101 and 102 while setting the separating distance therebetween. A projection length Δr of a gasket rib 103s between both edge profiles 103₁ and 103₂ may be comprised between 2.5 mm and 5 mm. A filling aperture 104 is provided at a location in the annular shape of the gasket for connecting the internal cavity C of the lens mould 100 to outside. The filling aperture 104 is to be used in a known manner for introducing a monomer-containing liquid amount into the mould cavity C.

An alternative embodiment also known for the peripheral mould sealing means 103 is shown in Figure 2b. The peripheral mould sealing means 103 are now comprised of a tape which is wrapped on the respective peripheral edges of the first and second mould parts 101 and 102 and adheres thereto. Thus, the tape connects both mould parts 101 and 102 to each other and sets the desired separating distance between the mould surfaces S₁₀₁ and S₁₀₂. The tape length is selected to be little shorter than the common circumference length of both mould parts 101 and 102, so as to form a tape-free segment which forms the filling aperture 104.

The invention is compatible with using either of both peripheral mould sealing means of Figure 2a (gasket-based) and 2b (tape-based).

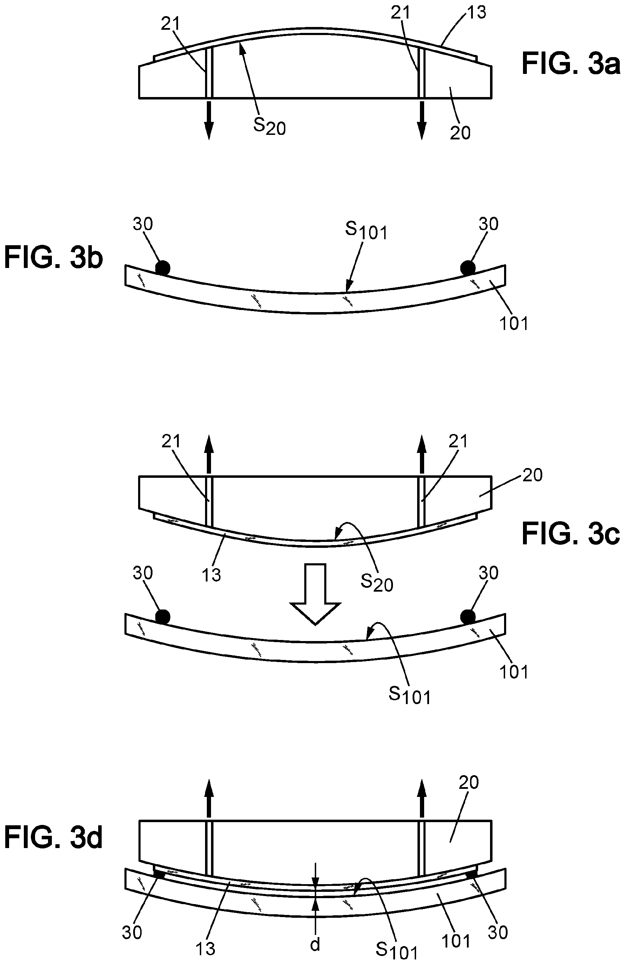

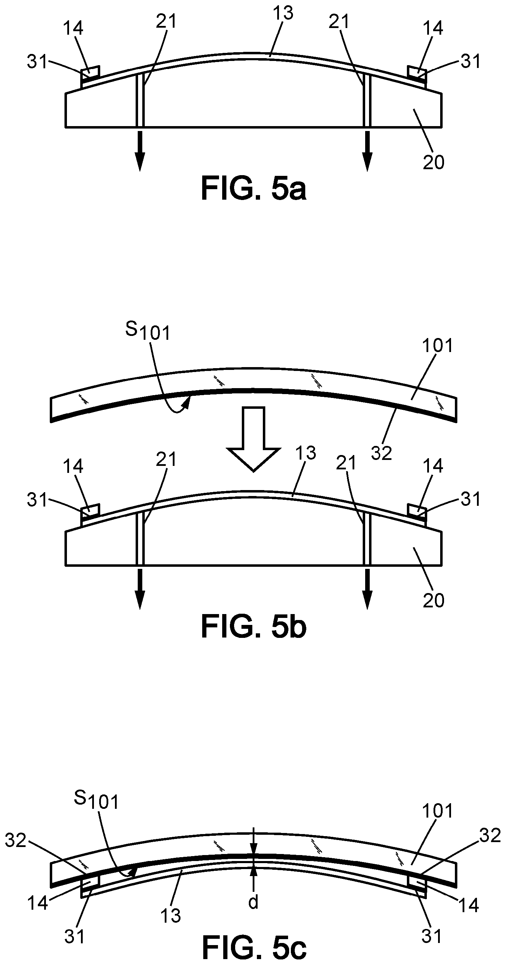

In the invention implementations described below, it is assumed that the wafer 13 is to be affixed to the first mould part 101. Put another way, the wafer-bearing mould part is the first one that defines the convex front lens surface S₁. First implementations that do not use spacers are illustrated by Figures 3a-3g. Second implementation illustrated by Figures 5a-5c uses spacers.

Referring to Figure 3a, a support 20 has a supporting surface S₂₀ that matches the bulged shape of the wafer 13. The wafer 13 is maintained in position against the supporting surface S₂₀ using any appropriate releasable fastening means such as suction means connected to channels 21 that extend through the support 20. The suction means are symbolically shown as arrows exiting from the channels 21. Suitable position-identification means such as a pin may also be used for setting an angular orientation of the wafer 13 on the supporting surface S₂₀ if necessary.

One or several glue portions 30 are deposited on the mould surface S₁₀₁ of the mould part 101. Commercially available glue dispensers may be used for depositing the glue portion(s) 30 in a viscous and sticky glue state. Various glue portion distributions may be implemented alternatively within the mould surface S₁₀₁. These distributions are defined by corresponding locations on the wafer 13 where each glue portion 30 will contact this wafer and adhere thereto.

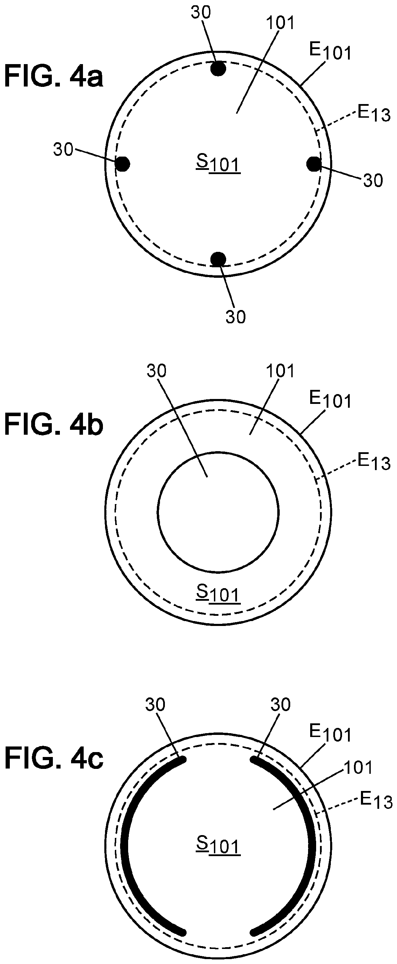

Figure 4a shows a first possible glue portion distribution comprised of several glue dots 30 which have been deposited on the mould surface S₁₀₁ of the mould part 101. The glue dots 30 have been deposited at respective locations suitable to contact later on the wafer 13 close to its peripheral edge E₁₃. The glue dots 30 may be located evenly along the peripheral edge E₁₃, for example three glue dots separated by successive angular sectors of 120° (degrees) from a center point of the mould surface S₁₀₁, or four glue dots separated by 90°-sectors as represented, or six glue-dots separated by 60°-sectors, for example. Each glue dot may be about 1 mm in diameter when measured parallel to the mould surface S₁₀₁. E₁₀₁ denotes the peripheral edge of the mould part 101.

Figure 4b corresponds to Figure 4a but for a second possible glue portion distribution comprised of a single glue portion 30 which is deposited in a center area of the mould surface S₁₀₁. Such centrally located glue portion 30 may be large for example up to 40 mm to 60 mm in diameter, but ensuring that the glue portion will not extend outwardly beyond the peripheral edge E₁₃ of the wafer 13.

Figure 4c also corresponds to Figure 4a but for a third possible glue portion distribution comprised of several arc-shaped glue segments 30 which are deposited on the mould surface S₁₀₁ of the mould part 101. The arc-shaped glue segments 30 are positioned to contact later on the wafer 13 close to and parallel to its peripheral edge E₁₃. For example, two arc-shaped glue segments 30 may be implemented, each of about 1 mm in width and about 120° in angular extension about the center point of the mould surface S₁₀₁.

For all glue dot configurations, it is an issue that the glue dot portions have open distribution such that liquid can flow from outside to between the glue portions and can fully fill free space which separate the glue portions.

Figure 3b shows the mould part 101 bearing glue portions 30, with two of them visible in the figure.

Figure 3c shows the wafer-bearing support 20 of Figure 3a and the glue-portion bearing mould part 101 of Figure 3b being moved closer to each other. Moving direction is perpendicular to the wafer 13 and mould surface S₁₀₁, and moving is produced by appropriate actuator system (not represented), preferably electrically controlled.

In case of the one-portion configuration of Figure 4b, the glue portion 30 is deposited as a heap onto the mould surface S₁₀₁ of the mould part 101 in a central area thereof, and then approaching the wafer-bearing support 20 until pressing the glue heap with the wafer 13 and thereby causing radial spreading of the glue heap.

Figure 3d shows the situation after the glue portions 30 have been contacted by the wafer 13. The separating distance d between the wafer 13 and the mould surface S₁₀₁ is reduced until it equals a final value targeted in the ophthalmic lens 10 to be obtained between its front surface S₁ and the wafer 13. The viscosity of the glue in its as-deposited state on the mould surface S₁₀₁ is selected so that the separating distance value d as existing when stopping the relative displacement of the support 20 and mould part 101 remains unchanged over time thereafter. For producing such viscosity value, the glue may be obtained from a monomer-containing liquid which is partially polymerized for forming an oligomer-containing glue. Partial polymerization may be produced in a controlled way by UV-irradiating or thermally curing the monomer-containing liquid for a determined duration before the glue is deposited on the mould surface S₁₀₁. The monomer-containing liquid used for preparing the glue has been called second one in the general part of the present description.

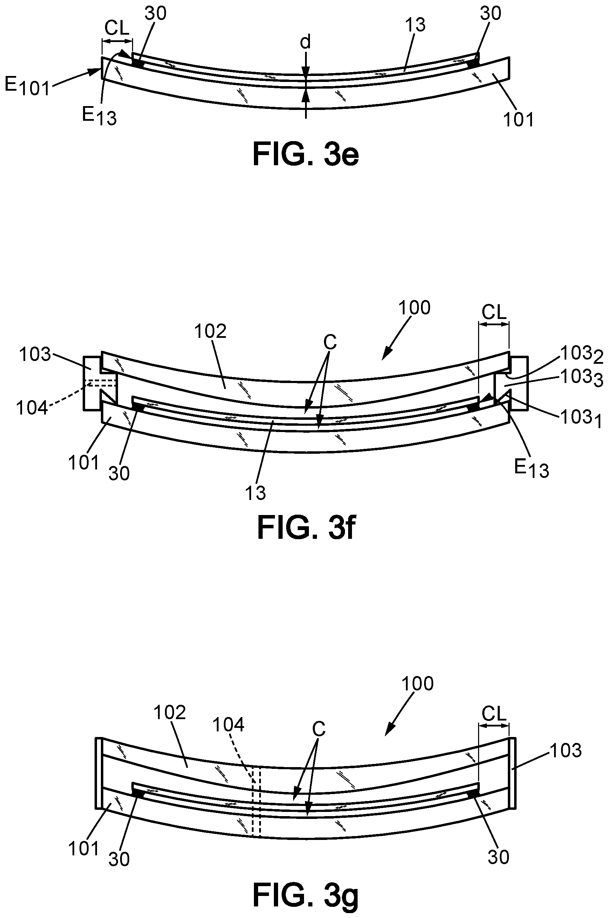

Suction through the support 20 is then suppressed so that the wafer 13 is released form the supporting surface S₂₀. After removal of the support 20, the sub-assembly shown in Figure 3e is obtained. This sub-assembly is comprised of the mould part 101 and the wafer 13 glued to the mould surface S₁₀₁. The mould part 101 thus constitutes the so-called wafer-bearing mould part. The glue portions 30 are capable of remaining unchanged in shape over time, thus maintaining constant the separating distance d until the end of the manufacturing method. Thus, the separating distance d is at its final value from the configuration illustrated by Figure 3d. Preferably, the separating distance d may be comprised between 0.6 mm and 1.2 mm, for example equal to 0.70 mm. A diameter value for the wafer 13 has been initially selected such that the wafer edge E₁₃ is inside the peripheral edge E₁₀₁ of the mould part 101, with a clearance distance CL selected with respect to the peripheral mould sealing means 103 as explained below.

The sub-assembly of Figure 3e is used for forming the completed lens mould 100. Figure 3f illustrates using the gasket-based peripheral mould sealing means 103 of Figure 2a and Figure 3g illustrates using the tape-based peripheral mould sealing means 103 of Figure 2b. For the gasket case of Figure 3f, the clearance distance CL is large enough for the wafer edge E₁₃ to be away from the gasket rib 103s. Typically, the clearance distance CL is selected depending on the projection length Δr of the gasket rib 103₃ so that the wafer edge E₁₃ is distant from the gasket rib 103₃ by about 0.25 mm - 0.50 mm all along the wafer circumference. So-completed lens mould 100 forms the cavity C which extends on both sides of the wafer 13 with peripheral free liquid passage between the wafer edge E₁₃ and the gasket rib 103s. For the tape case of Figure 3g, the clearance distance CL may be reduced if desired because of absence of any rib internal to the peripheral mould sealing means 103. For the tape-based mould assembly of Figure 3g, the clearance distance CL may be of between 0.25 mm and 0.75 mm, for example equal to 0.50 mm.

The cavity C is then filled with a monomer-containing liquid amount through the aperture 104. This monomer-containing liquid has been called first one in the general part of the present description. Such filling can be performed in a usual way as known before the invention. In particular, the monomer-containing liquid penetrates around each glue portion 30 and fully completes filling of the cavity C in addition to the wafer 13 and the glue portion(s) 30. The manufacturing method can then be continued in a usual way again by thermally processing the filled lens mould 100 so as to thermoset simultaneously the monomer-containing liquid and each glue portion 30 if polymerizable. In the end of the manufacturing method, the lens mould 100 is disassembled and the ophthalmic lens 10 is recovered. It is comprised of the wafer 13 embedded between both thermoset lens portions 11 and 12. In case of the second glue portion distribution of Figure 4b, lens portion 11 is partially comprised of the thermoset centrally-located glue portion 30. Adhesion of the wafer 13 to thermoset material of both lens portions 11 and 12 is ensured through appropriate material selection for the exposed surfaces of the wafer 13.

Preferably but without it being necessary, the monomer-containing liquids used respectively for producing the glue and for filling the cavity C may be identical or almost identical. This has several benefits including the glue portions 30 being invisible in the final ophthalmic lens 10, optimized curing parameters common to the glue portions 30 and the lens portions 11 and 12, and separation behaviour from the mould parts 101 and 102 being identical for the glue portions 30 and the lens portions 11 and 12.

For example, when the refractive index value of both lens portions 11 and 12 is to be of about 1.67, a common monomer-containing liquid to be used for preparing the glue and for filling the cavity C may be obtained in the following way:
first prepolymer: mix 23.5 g (gram) of 2,3-di((2-mercaptoethyl)thio)-1-propanethiol, or DMPT, with 76.5 g of xylene diisocyanate, or XDI, then stir under nitrogen (N₂) at temperature of 118±2°C for 3 hours up to complete reaction,
second prepolymer: mix 73.5 g of DMPT with 26.5 g of XDI, then stir under nitrogen at temperature of 93±2°C for 3 hours up to complete reaction,
in an Erlenmeyer vessel: introduce 10.0 ml (millilitre) of tetrahydrofurane acting as non-protic solvent, or THF, followed by an amount of photocatalyst of a type commonly used for thiol-ene chemistry implemented for thermoset lenses, stir until full dissolution, then add 26 g of the first prepolymer and 24 g of the second prepolymer, stir until full dissolution, then filter with mesh of 6.0 µm (micrometer) under vacuum, and strip tetrahydrofurane under vacuum at room temperature.

The resulting monomer-containing liquid may be used as such for filling the cavity C of the lens mould 100.

For obtaining the glue to be used for building the sub-assembly of the mould part 101 with the wafer 13, an intermediate UV-irradiation of the monomer-containing liquid is to be carried out for adjusting viscosity. This UV-irradiation causes the monomers to form oligomers in a variable extent depending on the irradiation duration and intensity. Typically, UV-irradiation for maximum 3 to 5 minutes with intensity of about 275 mW/cm² (milliwatt per square-centimeter) is convenient for the glue portion distributions of Figures 4a and 4c. UV-irradiation for maximum 3 to 5 minutes with intensity of about 275 mW/cm² is also convenient for the glue portion distribution of Figure 4b, allowing appropriate spreading of the glue heap when the final value of the separation distance d is reached.

Figures 5a-5c illustrate another embodiment of the invention where the function of adherence-connecting the wafer 13 to the mould part 101 is produced separately from that of determining the value of the separating distance d. Spacers 14 are first glued on the wafer 13 using first glue dots 31, for example with spacer distribution similar to that of the glue portions 30 in Figure 4a. The spacers 14 may have various shapes, including cylinders to be positioned on the surface of the wafer 13 as shown in Figure 5a, or slotted spacers to be fitted onto the peripheral edge E₁₃ of the wafer 13. A glue layer 32 is separately deposited on the mould surface S₁₀₁, and the mould surface S₁₀₁ is applied against the wafer 13 with the spacers 14 therebetween using similar moving process as that illustrated by Figures 3c-3d. With such embodiment, the glue layer 32 forms the second glue portions mentioned in the general part of the present description. So-obtained sub-assembly is shown in Figure 5c and can be used as before for completing the manufacturing of the ophthalmic lens 10. Preferably, the spacers 14 may be out of thermoset material obtained from the same monomer-containing liquid as that used for filling the cavity C of the lens mould 100, and also for preparing the glue. Low viscosity is more appropriate for the glue portions 31 and 32 in this another implementation of the invention, for obtaining thin glue portions.

Although the preceding description has been provided for implementations where the wafer is glued to the first mould part, i.e. that which defines the convex front lens surface, the Man skilled in the art will be capable of adapting the method to gluing the wafer to the second mould part, i.e. that which defines the concave rear lens surface.

It is reminded again that the invention method can be used whatever the function of the wafer. In particular, the wafer is not limited to providing a microstructure such as a microlens array, a Fresnel microstructure or a grating pattern, but it may be light-polarizing. The wafer may also be designed to exhibit a varying optical parameter, for example an optical parameter to be controlled with suitable command signal. Generally, the wafer may be single-material of multilayered.

## Claims

1. A method for manufacturing a thermoset ophthalmic lens (10) that includes a wafer (13), said method comprising the following steps:
/1/ providing two mould parts, comprising a first mould part (101) that has a concave mould surface (S₁₀₁) suitable for defining a front surface (S₁) of the lens (10) and a second mould part (102) that has a convex mould surface (S₁₀₂) suitable for defining a rear surface (S₂) of the lens;
/2/ gluing the wafer (13) onto one of the concave and convex mould surfaces (S₁₀₁, S₁₀₂), the corresponding first or second mould part (101, 102) being referred to as wafer-bearing mould part, so as to set a separating distance (d) between the wafer and the concave or convex mould surface of said wafer-bearing mould part, using at least one glue portion (30; 31, 32);
/3/ assembling the first and second mould parts (101, 102) together with means (103) for peripherally sealing a lens mould (100) that encloses a cavity (C) between said first and second mould parts, the glued wafer (13) being located inside the cavity (C);
/5/ filling the cavity (C) with a first monomer-containing liquid;
/6/ thermally processing the filled lens mould (100) so as to cure at least the first monomer-containing liquid; and
/7/ separating the first and second mould parts (101, 102) from each other and recovering the lens (10) including the wafer (13) embedded in said lens,
wherein step 121 is performed so that free space remaining between the wafer (13) and the wafer-bearing mould part is filled in step /5/ together with a remaining empty part of the cavity (C) between said wafer and the mould part other than said wafer-bearing mould part, thus resulting into the wafer and each glue portion being embedded in the monomer-containing liquid,
and the at least one glue portion (30; 31, 32) used in step 121 has viscosity and adhesion suitable for the separating distance (d) being maintained between the wafer (13) and the wafer-bearing mould part at constant final value from step 121 to step /6/,
and the wafer (13) has a bulged shape, and the at least one glue portion contacts said wafer in step 121 within at least one bulging area of said wafer.

2. The method of claim 1, wherein the at least one glue portion (30) contacts the wafer (13) in step 121 within a center area of said wafer.

3. The method of claim 1, wherein the wafer (13) is bulged up to a peripheral edge (E₁₃) of said wafer, and the at least one glue portion (30) contacts said wafer in step 121 close to the wafer peripheral edge.

4. The method of claim 3, wherein the at least one glue portion (30) comprises several glue portions that each contact the wafer (13) in step 121 close to the wafer peripheral edge (E₁₃), each glue portion being shaped as a dot or an arc-shaped segment.

5. The method of one of the preceding claims, wherein the final value of the separating distance (d) between the wafer (13) and the wafer-bearing mould part is produced by moving the wafer (13) fastened to a support (20) closer to the wafer-bearing mould part.

6. The method of claim 5, wherein the support (20) is provided with a supporting surface (S₂₀) that matches the bulged shape of the wafer (13), and the wafer is maintained against said supporting surface temporarily in step 121 using suction between the supporting surface of the support and the wafer.

7. The method of one of claims 1 to 6, wherein each glue portion (30) is implemented in step 121 so as to contact both the wafer (13) and the wafer-bearing mould part at the end of said step /2/, said glue portion having a thickness selected for producing the final value of the separating distance (d) from said step /2/.

8. The method of one of claim 1 to 6, wherein the wafer (13) is glued to the wafer-bearing mould part in step 121 using at least one spacer (14) between said wafer and said wafer-bearing mould part, each spacer having a thickness selected for producing the final value of the separating distance (d) from step /2/, and for each spacer using a first glue portion (31) between the spacer and the wafer and a second glue portion (32) between said spacer and the wafer-bearing mould part.

9. The method of one of the preceding claims, wherein the wafer (13) is micro-structured with depressions and reliefs, in particular depressions and reliefs forming a set of microlenses, a Fresnel microstructure or a grating pattern, or the wafer is light-polarizing, or the wafer is designed as an active wafer suitable for producing a variable lens parameter, or the wafer has a reinforcement function for the lens (10), and/or the wafer is adapted for producing at least one of the following functions: tinting function, mirror function and antireflecting function.

10. The method of one of the preceding claims, wherein each glue portion (30; 31, 32) is obtained from a second monomer-containing liquid, said second monomer-containing liquid being UV- or thermally pre-processed before step 121 so as to become an oligomer-containing glue, and said oligomer-containing glue is used in step 121 for forming the at least one glue portion.

11. The method of claim 10, wherein the first and second monomer-containing liquids are identical.

12. The method of one of the preceding claims, wherein the wafer-bearing mould part is the first mould part (101) that has the concave mould surface (S₁₀₁).

13. The method of one of the preceding claims, wherein the means (103) for peripherally sealing the lens mould (100) comprise a gasket designed for accommodating respective peripheral edges of the first and second mould parts (101, 102) in recesses of said gasket, or comprises a tape suitable for adhering to the respective peripheral edges of the first and second mould parts.

14. The method of claim 13, wherein a size of the wafer (13) is selected so that the peripheral edge (E₁₃) of said wafer is surrounded by the means (103) for peripherally sealing the lens mould (100) during steps /5/ and /6/ with a gap intermediate between said peripheral edge of the wafer and said means for peripherally sealing the lens mould all around the wafer.

15. A sub-assembly that comprises:
- a mould part (101), having a concave or convex mould surface (S₁₀₁) suitable for defining a front surface (S₁) of an ophthalmic lens (10) or a rear surface (S₂) of the lens, respectively;
- a wafer (13), affixed to the concave or convex mould surface (S₁₀₁) and facing said mould surface (S₁₀₁) with a gap therebetween; and
- at least one glue portion (30; 31, 32) located between the wafer (13) and the mould part (101),
wherein the wafer (13) is affixed to the concave or convex mould surface (S₁₀₁) through the at least one glue portion (30; 31, 32), said at least one glue portion having viscosity and adhesion suitable for maintaining constant over time a separating distance (d) between the wafer and the concave or convex mould surface,
and the wafer (13) has a bulged shape, and the at least one glue portion (30; 31, 32) contacts said wafer within at least one bulging area of said wafer.
